**Europäisches Patentamt**

**European Patent Office**

**Office européen des brevets**

(10)

(11) Veröffentlichungsnummer · **0 235 810**
**B1**

(12) **EUROPÄISCHE PATENTSCHRIFT**

(45) Veröffentlichungstag der Patentschrift: **16.05.90**

(51) Int. Cl.[5]: **C 04 B 35/58, C 04 B 35/80**

(21) Anmeldenummer: **87103081.3**

(22) Anmeldetag: **04.03.87**

(54) **Keramischer Formkörper und Verfahren zu seiner Herstellung.**

(30) Priorität: **04.03.86 DE 3607076**
**26.03.86 DE 3610274**

(43) Veröffentlichungstag der Anmeldung:
**09.09.87 Patentblatt 87/37**

(45) Bekanntmachung des Hinweises auf die
Patenterteilung:
**16.05.90 Patentblatt 90/20**

(84) Benannte Vertragsstaaten:
**AT BE CH DE ES FR GB GR IT LI LU NL SE**

(56) Entgegenhaltungen:
**WO-A-79/00101**
**DE-A-2 349 277**

**CHEMICAL ABSTRACTS, Band 99, Nr. 18, 30.
Mai 1983, Seite 301, Zusammenfassung Nr.
144922u, Columbus, Ohio, US; & JP-A-58 91 073
(ASAHI GLASS CO., LTD) 30-05-1983**

(73) Patentinhaber: **Claussen, Nils, Prof. Dr.**
**Föhrengrund 7**
**D-2107 Rosengarten (DE)**

(72) Erfinder: **Claussen, Nils, Prof. Dr.**
**Föhrengrund 7**
**D-2107 Rosengarten (DE)**

(74) Vertreter: **Huber, Bernhard, Dipl.-Chem. et al**
**Patentanwälte H. Weickmann, Dr. K. Fincke F.A.
Weickmann, B. Huber Dr. H. Liska, Dr. J. Prechtel
Möhlstrasse 22 Postfach 860 820
D-8000 München 86 (DE)**

(56) References cited:
**CHEMICAL ABSTRACTS, Band 98, Nr. 16, 1983,
Seite 293, Zusammenfassung 131079d,
Columbus, Ohio, US; D.B. FISCBACH et al.:
"Exploatory research on silicon nitride
composites", & ENERGY RES. ABSTR. 1982,
7(20), ABSTR. Nr. 54464**

Courier Press, Leamington Spa, England.

**Beschreibung**

Die Erfindung betrifft einen keramischen Formkörper und ein Verfahren zur Herstellung des Formkörpers.

Siliciumnitrid wird nach verschiedenen Verfahren zu Formkörpern verarbeitet, die je nachdem, welches Verfahren angewendet wurde, entsprechend unterschiedliche Eigenschaften aufweisen. Heiß-gepreßtes oder heißisostatisch-gepreßtes Siliciumnitrid enthält Verdichtungshilfen, die bei hohen Temperaturen, d.h. bei Temperaturen über 1000°C zu einem frühzeitigen Festigkeitsverlust führen, da einerseits glashaltige Korngrenzenphasen erweichen und so ein Korngleiten ermöglichen und andererseits Korngrenzenkorrosion auftreten kann. Die Festigkeit dieser Siliciumnitride ist bei tiefen und mittleren Temperaturen allerdings sehr hoch. Gesintertes Siliciumnitrid ist ähnlich zusammengesetzt wie heiß-gepreßtes Siliciumnitrid, es enthält zum Teil jedoch mengenmäßig mehr Sinterhilfen. Auch hier sind die Festigkeiten bei mittleren und erhöhten Temperaturen gut, sie fallen jedoch bei hohen Temperaturen noch stärker ab als die von heiß- oder heißisostatischgepreßtem Siliciumnitrid. Reaktionsgebundenes Siliciumnitrid besitzt aufgrund seiner charakteristischen Porosität eine geringe Ausgangsfestigkeit, hält diese jedoch auch bis zu sehr hohen Temperaturen, da es praktisch keine erweichenden Verunreinigungen besitzt. Bei allen Siliciumnitrid-Typen ist der Bruchwiderstand nicht ausreichend hoch und erreicht selten Werte von mehr als 6 MPa $\sqrt{m}$. Die Bruchzähigkeit kann erhöht werden durch Einbau von Fasern. Während des Sinter- bzw. Heißpreßvorganges werden jedoch in den meisten Fällen die guten mechanischen Eigenschaften der Fasern stark verschlechtert durch Kornwachstum der meist fein-kristallinen Fasern, durch Reaktionen mit der keramischen Matrix oder durch Bruch. Daher weisen die meisten bisher erzeugten Siliciumnitridfaser-Verbundwerkstoffe äußerst geringe Festigkeiten auf. Weiterhin ist es bekannt, keramische Werkstoffe durch Einbringen von ein-kristallinen Fasern zu verstärken. Bisher konnten jedoch die Eigenschaften dieser Whisker genannten Fasern nur ungenügend auf die keramische Matrix übertragen werden. Whisker haben sehr günstige Eigenschaften. Sie haben eine außerordentlich hohe mechanische Festigkeit, die bei Siliciumnitrid- oder Siliciumcarbid-Whiskern bis zu 20 GPa beträgt. Weiterhin haben sie ein hohes Elastizitätsmodul und meist eine theoretische Dichte. Aufgrund ihrer Eigenschaften überstehen sie das Heiß-Pressen oder das Heißisostatische-Pressen relativ unbeschadet.

Aus Chemical Abstracts Band 99, Nr. 18, Abstr.Nr. 144922 u ist ein Verfahren zur Verstärkung von $Si_3N_4$-Keramiken bekannt, bei dem Siliciumpulver mit Fasern aus SiC und/oder $Si_3N_4$ bestimmter Festigkeitswerte gemischt, geformt und durch das Erhitzen in einer Stickstoff-Ammoniak-Gasmischung bei 1400°C nitridiert wird. Die erzielten Festigkeitswerte erreichen 25 kg/mm² bei 1200°C.

Es war nun Aufgabe der vorliegenden Erfindung ein Verfahren zu schaffen, mit dem ein keramischer Formkörper hergestellt werden kann, der überragende Eigenschaften hinsichtlich der Festigkeit und des Bruchwiderstandes hat und das einfach durchzuführen ist.

Diese Aufgabe wird gelöst durch ein Verfahren zur Herstellung eines keramischen Formkörpers, das dadurch gekennzeichnet ist, daß man Siliciumpulver mit Whiskern aus SiC und/oder $Si_3N_4$ mischt, die Mischung formt, den Grünkörper mit einer oder mehreren Schichten einer Mischung aus Silicium und Siliciumnitrid und gegebenenfalls Sinterhilfen überzieht, anschließend mit einer Schicht aus einer Mischung von Silicium und/oder Siliciumnitrid und siliciumdioxidhaltigem Material überzieht, dann nitridiert und auf die Verglasungstemperatur der äußersten Schicht erhitzt und anschließend bei weiter erhöhter Temperatur heißisostatisch nachverdichtet.

Der erfindungsgemäß hergestellte keramische Formkörper besitzt im gesamten nutzbaren Temperaturbereich eine hohe Zähigkeit. Seine Festigkeit ist höher als bei bisher bekanntem reaktionsgebundenem Siliciumnitrid. Der erfindungsgemäß hergestellte Formkörper besitzt weiterhin eine überragende Kriechfestigkeit, die bisher nicht erreicht werden konnte. Das Verfahren ist einfach durchzuführen. Vorteilhaft ist weiter, daß die Endbearbeitung im Grünzustand erfolgen kann.

Zur erfindungsgemäßen Herstellung des keramischen Formkörpers wird das Siliciumpulver mit Whiskern vermischt. Die Vermischung des Siliciumpulvers mit den Whiskern erfolgt vorzugsweise im Rahmen einer P/M-Vermischung.

Der Grünkörper besteht somit aus Siliciumpulver, in das Whisker aus Siliciumnitrid oder Siliciumcarbid eingelagert sind. Der Anteil der Whisker beträgt vorzugsweise 5 bis 50 Vol. %, besonders bevorzugt 10 bis 30 Vol.-%. Die Whisker haben bevorzugt einen Durchmesser von 0,05 bis 10 µm, besonders bevorzugt von 1 bis 5 µm.

Bevorzugt wird als Siliciumpulver ein Pulver mit einer reaktionssinterfähigen Pulverteilchengröße verwendet. Besonders bevorzugt wird dazu ein Pulver mit einer mittleren Teilchengröße von ca. 1 bis 30 µm verwendet. Diese Teilchengröße wird beispielsweise dann erhalten, wenn das Siliciumpulver deagglomerationsattritiert wird. Beispielsweise kann das Siliciumpulver mit n-Hexan als Mahlflüssigkeit und mit Y-TZP- oder Hartmetallkügelchen als Mahlkörper 2 Stunden in einer Attritormühle vermahlen werden. Das Siliciumpulver wird dann mit den Whiskern vermischt, z.B. durch Taumeln in n-Hexan mit Plastikkugeln. Bevorzugt werden die Whisker mit Ultraschall dispergiert.

Die erhaltene Mischung aus Siliciumpulver und Whiskern kann durch jedes bekannte Formgebungsverfahren weiterverarbeitet werden. Sie kann beispielsweise durch Spritzgießen, isostatisches Kaltpressen oder ähnliches in die gewünschte Form gebracht werden. Gegebenenfalls kann anschließend an die Formgebung auch noch ein spanabhebendes Verfahren wie Drehen, Bohren oder Fräsen durchgeführt werden. Nach dieser Endbearbeitung wird der Grünkörper beschichtet, da bei Anwendung erhöhter Temperaturen in oxidierender Atmosphäre auf den keramischen Formkörper, der Whisker enthält, die Whisker zerstört werden können.

Der gebildete Grünkörper mit eingelagerten Whiskern wird mit einer oder mehreren Schichten, insbesondere 1 bis 3 Schichten, einer Mischung aus Silicium und Siliciumnitrid, die gegebenenfalls Sinterhilfen enthält, beschichtet. Bevorzugt wird die Mischung aus Silicium und Siliciumnitrid in Form eines Schlickers aufbereitet. Der Grünkörper wird dann in diesen Schlicker eingetaucht.

Wenn mehrere Schichten aufgetragen werden, ist vorzugsweise die Mischung der einzelnen Schichten verschieden zusammengesetzt, d.h. das Verhältnis zwischen Silicium und Siliciumnitrid variiert. Dabei ist es besonders bevorzugt, daß der Anteil an Silciumnitrid in den Schichten von innen nach außen zunimmt, während der Anteil an Silicium in den Schichten von innen nach außen in der Mischung abnimmt.

In einer besonder bevorzugten Ausführungsform wird der Grünkörper zunächst in einen Schlicker aus 70 Teilen Silicium und 30 Teilen Siliciumnitrid mehrmals eingetaucht. Anschließend wird der Grünkörper in einen Schlicker aus 50 Teilen Silicium und 50 Teilen Siliciumnitrid und anschließend in einen Schlicker aus 30 Teilen Silicium und 70 Teilen Siliciumnitrid eingetaucht. Diese Mischungen enthalten bevorzugt noch Sinterhilfen.

In einer weiteren bevorzugten Ausführungsform wird der Grünling in eine Mischung aus Silicium und Siliciumnitrid getaucht, die noch zusätzlich Whisker enthält. Der Anteil der Whisker in der Mischung beträgt bevorzugt 5 bis 50 %, besonders bevorzugt 10 bis 30 %.

Anschließend wird eine äußerste Schicht, die aus Silicium und/oder Siliciumnitrid und siliciumdioxidhaltigem Material sowie gegebenenfalls Sinterhilfen besteht, aufgebracht und der auf diese Art beschichtete Grünkörper wird dann getrocknet.

Bevorzugt wird für diese äußerste Schicht eine Mischung, die aus 5 bis 100 Vol.-% Siliciumdioxid, 0 bis 95 % Siliciumnitrid und gegebenenfalls Cordierit, Forsterit, Mullit und/oder Zirkon besteht, aufgebracht.

Besonders bevorzugt wird als Mischung für die letzte Schicht eine Suspension aus 30 bis 50 Teilen Siliciumdioxid, 30 bis 50 Teilen Siliciumnitrid und 10 bis 30 Teilen Silicium verwendet. Beim Nitriervorgang stören diese Schichten nicht, da sie nicht sintern, da dazu die Temperaturen zu niedrig sind. Durch den Anteil an Siliciumnitrid ist eine hohe Stickstoffdurchlässigkeit gegeben.

Der beschichtete, getrocknete Formkörper wird bei einer Temperatur im Bereich von 1200°C bis 1400°C nitridiert. Der Nitridierprozeß ist problemlos durchzuführen, da die Volumenveränderung zwischen dem Siliciumgrünling und dem fertigen Siliciumnitridkörper minimal ist, so daß sich praktisch keine verdichtungshemmenden Spannungen ergeben. Da die Whisker im thermisch gedehnten Zustand in die Matrix aus reaktionsgebundenem Siliciumnitrid eingebaut werden, tritt bei tieferen Temperaturen eine Vorspannung auf, die erwünscht ist.

Nach Abschluß dieses Reaktionssinterns wird dann der Körper nochmals im Vakuum aufgeheizt, bis die äußerste glashaltige Schicht dicht geworden ist. Dies ist bei Temperaturen von ca. 1500 bis 1700°C der Fall. Anschließend wird dann bei weiter erhöhter Temperatur Stickstoff mit hohem Druck aufgegeben, so daß der Körper nachverdichtet wird. Es wird dazu ein Druck von 10 bis 200 MPa angewendet. Die Temperatur beträgt dabei vorzugsweise 1600°C bis 1900°C, bevorzugt 1700°C bis 1800°C.

Mit dem erfindungsgemäßen Verfahren werden keramische Formkörper erhalten, deren Festigkeit bei einer Temperatur von 1300°C über 450 MPa liegt. Die Bruchwiderstandswerte liegen sogar im Bereich von über 8 MPa $\sqrt{m}$. Ein derartig hergestellter Formkörper hat eine hohe Festigkeit und hohe Zähigkeit. Weiterhin ist er oxidationsbeständig und kann sehr einfach hergestellt werden. Die Schichten haften infolge ihrer Verzahnung mit dem Kern, die auf die Zusammensetzung der Schichten und des Kern zurückzuführen ist, sehr gut. Das erfindungsgemäße Verfahren ist leicht durchzuführen. Die Herstellungstechnik ist einfacher als bei bekannten Beschichtungsverfahren, wie z.B. der CVD- oder PVD-Beschichtung.

Ein weiterer Gegenstand der Erfindung ist ein keramischer Formkörper, der aus einem Kern aus reaktionsgebundenem Siliciumnitrid mit darin eingelagerten Whiskern aus Siliciumcarbid und/oder Siliciumnitrid besteht. Dieser Kern ist mit einer oder mehreren Schichten einer Mischung aus Siliciumnitrid und reaktionsgebundenem Siliciumnitrid, die gegebenenfalls noch Sinterhilfen enthält, beschichtet. Die äußerste Schicht ist glasartig und besteht aus einer Mischung von reaktionsgebundenem Siliciumnitrid und/oder Siliciumnitrid und Siliciumdioxidhaltigem Material.

Besonders bevorzugt enthalten die auf den Kern aufgebrachten Schichten 5 bis 50 Vol.% Whisker.

Dieser erfindungsgemäße keramische Formkörper hat eine hohe Festigkeit und Zähigkeit, sowie sehr gute Bruchwiderstandwerte. Er zeichnet sich gegenüber anderen bekannten Formkörpern durch seine besonders hohe Dichte aus.

Die Erfindung wird noch durch ein Beispiel erläutert:

## Beispiel

80 Teile feines (~ 10 µm) Si-Pulver und 20 Teile SiC-Whisker (1 - 5 µm im Durchmesser) wurden in Propanol vermischt. Das getrocknete Mischpulver wurde isostatisch zu Zylindern (1 cm x 1 cm Durchmesser) bei 630 MPa verpreßt. Die Grünkörper wurden zunächst in einen gleichartig aufbereiteten Schlicker aus 70 Teilen Si und 30 Teilen Si$_3$N$_4$, dem 10 Vol.-% Al$_2$O$_3$ und 10 Vol.-% Y$_2$O$_3$ als Sinterhilfen zugesetzt waren, dreimal eingetaucht. Anschließend wurde der Tauchvorgang in gleicher Weise wiederholt mit einem Schlicker aus 50 Teilen Si und 50 Teilen Si$_3$N$_4$. Danach wurde der Tauchvorgang mit einem Schlicker aus 30 Teilen Si und 70 Teilen Si$_3$N$_4$ wiederholt. Zuletzt wurden die Körper in eine Suspension aus 40 Teilen SiO$_2$, 40 Teilen Si$_3$N$_4$ und 20 Teilen Si getaucht. Bis auf die letzte SiO$_2$-haltige Schicht wurden den drei darunter liegenden Schichten 5 Vol.-% SiC-Whisker zugesetzt. Danach wurde der Körper bei 1350°C 5 Stunden lang bei Normaldruck (0,1 MPa) getrocknet.

Nach dem Trocknen wurde der beschichtete Verbundkörper in einer Sinter-HIPpe bei derselben Temperatur nitridiert und dann im Vakuum innerhalb 30 Minuten auf 1650°C erhitzt, bis die glashaltige äußere Schicht keine offene Porosität mehr besaß. Anschließend wurde ohne wesentliche Temperaturerniedrigung N$_2$ mit einem Druck von 150 MPa aufgegeben und die Temperatur bis auf 1850°C gesteigert. Die erhaltenen Schichten waren jeweils 50 bis 100 µm dick.

## Patentansprüche

1. Verfahren zur Herstellung eines keramischen Formkörpers, wobei man Siliciumpulver mit Whiskern aus Siliciumnitrid und/oder Siliciumcarbid mischt, die Mischung formt und nitridiert, dadurch gekennzeichnet, daß man den Grünkörper mit einer oder mehreren Schichten einer Mischung aus Silicium und Siliciumnitrid und gegebenenfalls Sinterhilfen überzieht, anschließend mit einer Schicht aus einer Mischung von Silicium und/oder Siliciumnitrid und Siliciumdioxidhaltigem Material überzieht, dann nitridiert und auf die Verglasungstemperatur der äußersten Schicht erhitzt und anschließend bei weiter erhöhter Temperatur heißisostatisch nachverdichtet.

2. Verfahren nach Anspruch 1, dadurch gekennzeichnet, daß man ein Siliciumpulver verwendet, das vorher deagglomerationsattritiert wurde.

3. Verfahren nach einem der vorhergehenden Ansprüche, dadurch gekennzeichnet, daß man die Whisker mit Ultraschall dispergiert.

4. Verfahren nach einem der vorhergehenden Ansprüche, dadurch gekennzeichnet, daß die Mischung durch Spritzgießen oder isostatisches Kaltpressen und gegebenenfalls anschließend durch Drehen, Bohren oder Fräsen geformt wird.

5. Verfahren nach einem der vorhergehenden Ansprüche, dadurch gekennzeichnet, daß das Nachverdichten bei einem Druck von 10 bis 200 MPa und bei einer Temperatur im Bereich von 1600°C bis 1900°C, bevorzugt 1700°C bis 1800°C, erfolgt.

6. Verfahren nach einem der vorhergehenden Ansprüche, dadurch gekennzeichnet, daß die Mischung zur Beschichtung des Grünlings aus 10 bis 90 Vol.-% Si$_3$N$_4$ und 90 bis 10 Vol.-% Silicium besteht.

7. Verfahren nach einem der vorhergehenden Ansprüche, dadurch gekennzeichnet, daß als äußerste Schicht eine Mischung aus 5 bis 100 % SiO$_2$, 0 bis 95 % Si$_3$N$_4$, 0 bis 95 % Silicium und gegebenenfalls Cordierit, Forsterit, Mullit und/oder Zirkon aufgetragen wird.

8. Verfahren nach einem der vorhergehenden Ansprüche, dadurch gekennzeichnet, daß der Grünkörper so beschichtet wird, daß die einzelnen Schichten 10 bis 200 µm dick sind.

9. Keramischer Formkörper, dadurch gekennzeichnet, daß er aus einem Kern aus reaktionsgebundenem Siliciumnitrid mit darin eingelagerten Whiskern aus Siliciumcarbid und/oder Siliciumnitrid besteht, der eine oder mehrere Schichten einer Mischung aus reaktionsgebundenem Siliciumnitrid und Siliciumnitrid, die gegebenenfalls noch Sinterhilfen enthält, hat und als äußerste Schicht noch eine glasartige Schicht aus einer Mischung von reaktionsgebundenem Siliciumnitrid und/oder Siliciumnitrid und Siliciumdioxid und gegebenenfalls Sinterhilfen aufweist.

10. Keramischer Formkörper nach Anspruch 9, dadurch gekennzeichnet, daß in den Kern und gegebenenfalls in die äußeren Schichten 5 bis 50 % Whisker eingelagert sind.

## Revendications

1. Procédé de fabrication d'une pièce en céramique qui est caractérisé en ce que l'on mélange une poudre de silicium avec des whiskers de nitrure de silicium et/ou de carbure de silicium, l'on façonne le mélange et on le nitrure, caractérise en ce que l'on recouvre le corps vert d'une ou plusieurs couches d'un mélange de silicium et de nitrure de silicium et éventuellement d'adjuvants de frittage, puis l'on recouvre d'une couche d'un mélange de silicium et/ou de nitrure de silicium et d'un produit contenant du dioxyde de silicium, puis l'on nitrure et l'on chauffe à la temperature de vitrification de la couche externe et ensuite l'on comprime à chaud et de façon isostatique à une température en core augmentée.

2. Procédé selon la revendication 1, caracterisé en ce que l'on utilise une poudre de silicium qui a subi au préalable une attrition de désagglomération.

3. Procédé selon l'une des revendications precédentes, caracterisé en ce que l'on disperse les whiskers au moyen d'ultrasons.

4. Procédé selon l'une des revendications précédentes, caractérise en ce que le mélange est façonné par moulage par injection ou par compression isostatique à froid puis éventuellement par tournage, perçage ou fraisage.

5. Procédé selon l'une des revendications précédentes, caractérisé en ce que la compression ultérieure a lieu sous une pression de 10 à 200MPa et à une temperature comprise dans la gamme de 1600°C à 1900°C, de préférence de 1700°C à 1800°C.

6. Procédé selon l'une des revendications précédentes, caractérisé en ce que le mélange destiné à recouvrir le compact vert consiste en 10 à 90 % en volume de Si$_3$N$_4$ et en 90 à 10 % en poids de silicium.

7. Procédé selon l'une des revendications précédentes, caractérisé en ce que l'on applique, comme couche externe, un mélange de 5 à 100 % de SiO$_2$, de 0 à 95 % de Si$_3$N$_4$, de 0 à 95 % de silicium et éventuellement de cordiérite, de forstérite, de mullite et/ou de zircone.

8. Procédé selon l'une des revendications précédentes, caractérisé en ce que le corps vert est revètu de telle façon que les couches individuelles sont épaisses de 10 à 200 µm.

9. Piéce en céramique caractérisée en ce qu'elle consiste en un noyau de nitrure de silicium lié par réaction, dans lequel ont ete introduits des whiskers de carbure de silicium et/ou de nitrure de silicium, qui est revêtu d'une ou plusieurs couches d'un mélange de nitrure de silicium et de nitrure de silicium lié par réaction qui contient éventuellement encore des adjuvants de frittage, et qui présente comme couche externe une couche vitreuse qui consiste en un melange de nitrure de silicium lié par réaction et/ou de nitrure de silicium et de dioxyde de silicium et éventuellement d'adjuvants de frittage.

10. Pièce en céramique selon la revendication 9, caractérisée en ce que 5 à 50 % de whiskers ont été introduits dans le noyau et eventuellement dans les couches externes.

**Claims**

1. Process for the production of a ceramic formed body, whereby one mixes silicon powder with whiskers of silicon nitride and/or silicon carbide, forms the mixture and nitrides, characterised in that one coats the green bodies with one or more layers of a mixture of silicon and silicon nitride and optionally sinter aids, subsequently coats with a layer of a mixture of silicon and/or silicon nitride and silicon dioxide-containing material, then nitrides and heats to the vitrification temperature of the outermost layer and subsequently hot-isostatically post-consolidates at a further increased temperature.

2. Process according to claim 1, characterised in that one uses a silicon powder which has been previously subjected to deagglomeration attrition.

3. Process according to one of the preceding claims, characterised in that one disperses the whiskers with ultrasonics.

4. Process according to one of the preceding claims, characterised in that the mixture is formed by injection moulding or isostatic cold pressing and optionally by subsequent turning, drilling or milling.

5. Process according to one of the preceding claims, characterised in that the post-consolidation takes place at a pressure of 10 to 200 MPa and at a temperature in the range of 1600°C. to 1900°C., preferably 1700°C. to 1800°C.

6. Process according to one of the preceding claims, characterised in that the mixture for the coating of the green body consists of 10 to 90 vol. % Si$_3$N$_4$ and 90 to 10 vol. % silicon.

7. Process according to one of the preceding claims, characterised in that, as outermost layer, there is applied a mixture of 5 to 100% SiO$_2$, 0 to 95% Si$_3$N$_4$, 0 to 95% silicon and possibly cordierite, forsterite, mullite and/or zircon.

8. Process according to one of the preceding claims, characterised in that the green body is so coated that the individual layers are 10 to 200 µm. thick.

9. Ceramic formed body, characterised in that it consists of a core of reaction-bonded silicon nitride with whiskers embedded therein of silicon carbide and/or silicon nitride which has one or more layers of a mixture of reaction-bonded silicon nitride and silicon nitride, which possibly also contains sinter aids, and, as outermost layer, also has a glass-like layer of a mixture of reaction-bonded silicon nitride and/or silicon nitride and silicon dioxide and possibly sinter aids.

10. Ceramic formed body according to claim 9, characterised in that 5 to 50% of whiskers are embedded in the core and possibly in the outer layers.